(19) Europäisches Patentamt
European Patent Office
Office européen des brevets

(11) **EP 4 783 067 A1**

(12) **EUROPEAN PATENT APPLICATION**

(43) Date of publication:
**29.07.2026 Bulletin 2026/31**

(21) Application number: **26161233.7**

(22) Date of filing: **30.12.2019**

(51) International Patent Classification (IPC):
**G06N 3/044** (2023.01)    **G06N 3/0442** (2023.01)
**G06N 3/045** (2023.01)    **G06N 3/0455** (2023.01)
**G06N 3/08** (2023.01)    **G06N 3/09** (2023.01)
**G08G 1/01** (2006.01)    **G08G 1/16** (2006.01)
**B60W 60/00** (2020.01)    **G06N 3/02** (2006.01)

(52) Cooperative Patent Classification (CPC):
**G08G 1/0129; B60W 60/00274; G06N 3/0442;
G06N 3/0455; G06N 3/09;** B60W 2554/4045;
B60W 2554/801; B60W 2554/802; B60W 2554/803;
B60W 2554/804; B60W 2556/10; G06N 3/044;
G06N 3/045; G06N 3/08; G08G 1/166

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(62) Document number(s) of the earlier application(s) in accordance with Art. 76 EPC:
**19958672.8 / 4 075 407**

(71) Applicant: **Yinwang Intelligent Technologies Co., Ltd.**
**Shenzhen, Guangdong 518110 (CN)**

(72) Inventors:
  • **LIU, Yalin**
    **Shenzhen, Guangdong, 518129 (CN)**
  • **SONG, Xiaolin**
    **Shenzhen, Guangdong, 518129 (CN)**
  • **ZENG, Yanbing**
    **Shenzhen, Guangdong, 518129 (CN)**
  • **CAO, Haotian**
    **Shenzhen, Guangdong, 518129 (CN)**

(74) Representative: **Maiwald GmbH
Engineering
Elisenhof
Elisenstrasse 3
80335 München (DE)**

Remarks:
This application was filed on 27-02-2026 as a divisional application to the application mentioned under INID code 62.

(54) **TRACK PREDICTION METHOD AND RELATED DEVICE**

(57)    A track prediction method is disclosed, and is applied to autonomous driving in the field of artificial intelligence. The track prediction method includes: obtaining relative moving information between a target vehicle and at least one first vehicle that is located in a detection range of a sensor, and first historical track information of the target vehicle (201); obtaining, based on the relative moving information, target information that indicates a driving intent of the target vehicle (202); and obtaining a first predicted track of the target vehicle by using a first track prediction model and by using the target information and the first historical track information as input (203). Track prediction accuracy for a vehicle is improved by using the method.

EP 4 783 067 A1

## Description

### TECHNICAL FIELD

This application relates to the field of artificial intelligence, and in particular, to a track prediction method and a related device.

### BACKGROUND

With rapid development of social economy, automobiles become increasingly popular and gradually become an indispensable part of people's daily work and life. In addition, with development of automobiles and communication technologies, automobiles gradually develop towards intelligence. In the future, autonomous automobiles (that is, intelligent automobiles) that replace manual driving by using machine intelligence guidance driving may become increasingly popular.

Now, a major application scenario of an autonomous vehicle is a mixed traffic flow road, that is, a road on which an autonomous vehicle and a driver-driven vehicle coexist. In this scenario, an autonomous vehicle is affected by a driver-driven vehicle. Therefore, to ensure user safety, an autonomous vehicle needs to obtain a track of a surrounding driver-driven vehicle. The autonomous vehicle is controlled based on the track, to ensure that the autonomous vehicle can safely and efficiently arrive at a destination.

However, people are very concerned about driving safety of both a conventional vehicle depending on manual driving and an intelligent vehicle depending on machine intelligence guidance driving.

Therefore, how to ensure vehicle driving safety becomes an urgent technical problem to be resolved.

### SUMMARY

This application provides a track prediction method and a related device. A driving intent of a target vehicle is used as input of track prediction, so that the track prediction for the target vehicle is more accurate.

According to a first aspect, this application provides a track prediction method, where the method includes: obtaining relative moving information between a target vehicle and at least one first vehicle that is located in a detection range of a sensor, and first historical track information of the target vehicle, where the sensor is disposed in a host vehicle, and the sensor may be specifically a radar sensor or a video obtaining sensor; obtaining, based on the relative moving information, target information that indicates a driving intent of the target vehicle; and obtaining a first predicted track of the target vehicle by using a first track prediction model and by using the target information and the first historical track information as input. In this embodiment of this application, the relative moving information between the target vehicle and the at least one first vehicle is obtained, and the first historical track information of the target vehicle is obtained; the target information that indicates the driving intent of the target vehicle is obtained based on the relative moving information; and the first predicted track of the target vehicle is obtained by using the first track prediction model and by using the target information and the first historical track information as input. In the foregoing manner, the driving intent of the target vehicle is used as input of track prediction, so that the track prediction for the target vehicle is more accurate.

In an optional design of the first aspect, the driving intent includes at least one of the following: changing a lane to the left, changing a lane to the right, or keeping straight driving.

In an optional design of the first aspect, the relative moving information indicates relative distance information and/or relative speed information between the target vehicle and each first vehicle at a plurality of moments, and the first historical track information includes first historical track locations of the target vehicle at a plurality of moments.

In an optional design of the first aspect, the obtaining, based on the relative moving information, target information that indicates a driving intent of the target vehicle includes: obtaining a payoff value of each driving intent of the target vehicle at each moment by using a linear payoff function model and by using the relative moving information as input; and obtaining the target information that indicates the driving intent of the target vehicle by using a recurrent neural network and by using the payoff value of each driving intent of the target vehicle at each moment as input. In this embodiment of this application, a payoff function is used to model an interaction between the target vehicle and a first vehicle surrounding the target vehicle, and then the payoff value is used as input of a driving intent recognition model, so that the driving intent of the target vehicle can be more accurately recognized, complexity of the model is reduced, and the model is more explainable.

In an optional design of the first aspect, the first historical track information and the first predicted track are components of a driving track of the target vehicle in a direction perpendicular to a lane, and the lane is a lane in which the target vehicle is located.

In an optional design of the first aspect, the first predicted track includes a plurality of predicted track locations, and the obtaining a first predicted track of the target vehicle by using a first track prediction model and by using the target information and the first historical track information as input includes: obtaining a plurality of pieces of encoded information by using an LSTM encoder and by using the target information and the first historical track information as input, where each moment corresponds to one piece of encoded information; and obtaining the plurality of predicted track locations by using an LSTM decoder and by using the plurality of pieces of encoded information as input, where the LSTM decoder is configured to perform decoding based on a plurality of pieces of input data to obtain the plurality of predicted track locations, and each piece of input data is related to the plurality of pieces of encoded information. In this embodiment of this application, output information of a decoder is effectively and fully used, so that a prediction result is more accurate.

In an optional design of the first aspect, each piece of input data is obtained by weighting the plurality of pieces of encoded information.

In an optional design of the first aspect, the method further includes: obtaining a movement status and second historical track information that are of the target vehicle, where the second historical track information is a component of a driving track of the target vehicle in a direction parallel to a lane, and the lane is a lane in which the target vehicle is located; and obtaining a second predicted track of the target vehicle by using a second track prediction model and by using the movement status and the second historical track information that are of the target vehicle as input, where the second predicted track is a component of the driving track of the target vehicle in a direction parallel to the lane. In this embodiment of this application, a lateral target vehicle track prediction model and a longitudinal target vehicle track prediction model are separately constructed, and driving intents of the target vehicle are separately considered in lateral and longitudinal directions, so that a more accurate predicted track of the target vehicle can be obtained.

According to a second aspect, this application provides an execution device, including:

an obtaining module, configured to: obtain relative moving information between a target vehicle and at least one first vehicle that is located in a detection range of a sensor, and first historical track information of the target vehicle, and obtain, based on the relative moving information, target information that indicates a driving intent of the target vehicle; and

a prediction module, configured to obtain a first predicted track of the target vehicle by using a first track prediction model and by using the target information and the first historical track information as input.

In an optional design of the second aspect, the driving intent includes at least one of the following: changing a lane to the left, changing a lane to the right, or keeping straight driving.

In an optional design of the second aspect, the relative moving information indicates relative distance information and/or relative speed information between the target vehicle and each first vehicle at a plurality of moments, and the first historical track information includes first historical track locations of the target vehicle at a plurality of moments.

In an optional design of the second aspect, the obtaining module is specifically configured to:

obtain a payoff value of each driving intent of the target vehicle at each moment by using a linear payoff function model and by using the relative moving information as input; and
obtain, by using a recurrent neural network and by using the payoff value of each driving intent of the target vehicle at each moment as input, the target information that indicates the driving intent of the target vehicle.

In an optional design of the second aspect, the first historical track information and the first predicted track are components of a driving track of the target vehicle in a direction perpendicular to a lane, and the lane is a lane in which the target vehicle is located.

In an optional design of the second aspect, the first predicted track includes a plurality of predicted track locations, and the prediction module is specifically configured to:

obtain a plurality of pieces of encoded information by using an LSTM encoder and by using the target information and the first historical track information as input, where each moment corresponds to one piece of encoded information; and
obtain the plurality of predicted track locations by using an LSTM decoder and by using the plurality of pieces of encoded information as input, where the LSTM decoder is configured to perform decoding based on a plurality of pieces of input data to obtain the plurality of predicted track locations, and each piece of input data is related to the plurality of pieces of encoded information.

In an optional design of the second aspect, each piece of input data is obtained by weighting the plurality of pieces of encoded information.

In an optional design of the second aspect, the obtaining module is further configured to:

obtain a movement status and second historical track information that are of the target vehicle, where the second historical track information is a component of a driving track of the target vehicle in a direction parallel to a lane, and the lane is a lane in which the target vehicle is located; and

the prediction module is further configured to:

obtain a second predicted track of the target vehicle by using a second track prediction model and by using the movement status and the second historical track information that are of the target vehicle as input, where the second predicted track is a component of the driving track of the target vehicle in a direction parallel to the lane.

According to a third aspect, an embodiment of the present invention provides a terminal device, including a memory, a communication interface, and a processor coupled to the memory and the communication interface, where the memory is configured to store instructions, the processor is configured to execute the instructions, the communication interface is configured to communicate with another device under control of the processor, and when the processor executes the instructions, the processor performs the method described in the first aspect or the possible embodiments of the first aspect.

According to a fourth aspect, a computer-readable storage medium is provided, where the computer-readable storage medium stores program code used for vehicle control. The program code includes instructions used to perform the method described in the first aspect or the possible embodiments of the first aspect.

According to a fifth aspect, a computer program product including instructions is provided. When the computer program product is run on a computer, the computer is enabled to perform the method described in the first aspect or the possible embodiments of the first aspect.

In embodiments of this application, relative moving information between a target vehicle and at least one first vehicle that is located in a detection range of a sensor is obtained, and first historical track information of the target vehicle is obtained; target information that indicates a driving intent of the target vehicle is obtained based on the relative moving information; and a first predicted track of the target vehicle is obtained by using a first track prediction model and by using the target information and the first historical track information as input. In the foregoing manner, the driving intent of the target vehicle is used as input of track prediction, so that the track prediction for the target vehicle is more accurate.

## BRIEF DESCRIPTION OF DRAWINGS

FIG. 1A is a schematic diagram of a structure of an artificial intelligence main framework;

FIG. 1B is a possible schematic diagram of a structure of a terminal device according to this application;

FIG. 1C is a possible schematic diagram of a structure of another terminal device according to this application;

FIG. 2 is a schematic diagram of an embodiment of a track prediction method according to an embodiment of this application;

FIG. 3 is a schematic diagram of a behavior intent of a pedestrian according to an embodiment of this application;

FIG. 4 is a schematic diagram of processing historical track information according to an embodiment of this application;

FIG. 5A is a schematic flowchart of a decoding process;

FIG. 5B is a schematic flowchart of a decoding process;

FIG. 6 is a possible schematic diagram of a structure of a terminal device described in an embodiment of this application;

FIG. 7 is a schematic diagram of a structure of another terminal device 700 according to an embodiment of this application;

FIG. 8 is a schematic diagram of a structure of an execution device according to an embodiment of this application; and

FIG. 9 is a schematic diagram of a structure of a chip according to an embodiment of this application.

## DESCRIPTION OF EMBODIMENTS

Embodiments of this application provide a track prediction method and a related device, to improve track prediction accuracy for a target vehicle.

The following describes embodiments of this application with reference to the accompanying drawings. A person of ordinary skill in the art may learn that, with development of technologies and emergence of new scenarios, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, and this is merely a distinguishing manner used when objects that have a same attribute are described in embodiments of this application. In addition, the terms "include", "contain" and any other variants mean to cover a non-exclusive inclusion, so that a process, method, system, product, or device that includes a list of units is not necessarily limited to those units, but may include other units that are not clearly listed or that are inherent to these processes, methods, products, or devices.

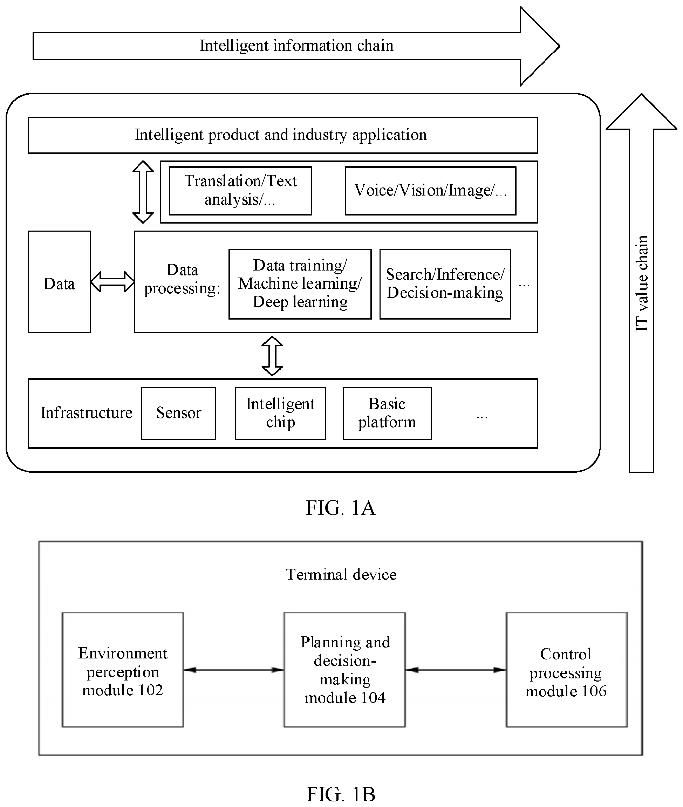

First, an overall working process of an artificial intelligence system is described. FIG. 1A shows a schematic diagram of a structure of an artificial intelligence main framework. The following describes the foregoing artificial intelligence main framework from two dimensions: an "intelligent information chain" (a horizontal axis) and an "IT value chain" (a vertical axis). The "intelligent information chain" reflects a general process from data obtaining to data processing. For example, the process may be a general process of intelligent information perception, intelligent information representation and formation, intelligent inference, intelligent decision-making, and intelligent execution and output. In this process, data goes through a condensation process of "data-information-knowledge-intelligence". The "IT value chain" reflects an industrial ecological process from an underlying infrastructure of artificial intelligence to information (providing and processing technology implementation) to a system, and reflects a value that artificial intelligence brings to the information technology industry.

(1) Infrastructure

The infrastructure provides computing capability support for the artificial intelligence system, communicates with an external world, and implements support by using a basic platform. A sensor is used to communicate with the outside. A computing capability is provided by an intelligent chip (a hardware acceleration chip such as a CPU, an NPU, a GPU, an ASIC, or an FPGA). The basic platform includes related platform assurance and support such as a distributed computing framework and a network, and may include cloud storage and computing, an interconnection and interworking network, and the like. For example, the sensor communicates with the outside to obtain data, and the data is provided, for computation, to an intelligent chip in a distributed computing system that is provided by the basic platform.

(2) Data

Data at an upper layer of the infrastructure is used to indicate a data source in the field of artificial intelligence. The data relates to a graph, an image, a voice, and a text, and further relates to internet of things data of a conventional device. The data includes service data of an existing system and perception data such as force, displacement, a liquid level, temperature, and humidity.

(3) Data processing

Data processing usually includes manners such as data training, machine learning, deep learning, search, inference, and decision-making.

In machine learning and deep learning, intelligent information of the data may be modeled, extracted, preprocessed, trained, or the like in a symbolized and formalized manner.

Inference is a process of simulating intelligent human inference methods in a computer or an intelligent system and using, based on an inference control policy, formalized information to carry out machine thinking and resolve problems. Typical functions are search and matching.

Decision-making is a process of making a decision after intelligent information inference, and usually provides functions such as classification, ranking, and prediction.

(4) General capabilities

After the data processing mentioned above is performed on data, some general capabilities may be further formed based on a data processing result. For example, the general capability may be an algorithm or a general-purpose system, such as translation, text analysis, computer vision processing, voice recognition, and image recognition.

(5) Intelligent products and industry applications

The intelligent products and industry applications are products and applications of an artificial intelligence system in various fields, and are encapsulation for an overall solution of artificial intelligence, to productize intelligent information decision-making and implement applications. Application fields thereof mainly include an intelligent terminal, intelligent manufacturing, intelligent transportation, intelligent home, intelligent healthcare, intelligent security protection, autonomous driving, a safe city, and the like.

The following describes the technical solutions in embodiments of the present invention in detail with reference to the accompanying drawings of the present invention.

First, a schematic diagram of a structure of a terminal device to which this application is applicable is described.

FIG. 1B shows a possible schematic diagram of a structure of a terminal device according to this application. As shown in FIG. 1B, the terminal device includes an environment perception module 102, a planning and decision-making module 104, and a control processing module 106. The environment perception module 102 mainly collects, by using a peripheral system (such as a sensor or a camera), obstacle information, information about a surrounding environment in which the terminal device is located, and traveling information about a vehicle in which the terminal device is located. The obstacle information includes but is not limited to a geographical location of an obstacle, a moving speed of the obstacle, a movement direction of the obstacle, a movement acceleration of the obstacle, a variance of the movement direction of the obstacle, a variance of the moving speed of the obstacle, and the like. The obstacle includes but is not limited to a vehicle, a pedestrian, a living obstacle, an inanimate obstacle, and the like. In this application, an example in which the obstacle is a driving vehicle is used to specifically describe some embodiments of this application.

The surrounding environment information includes but is not limited to information such as map information, weather information, an intersection type, lane lines, a quantity of lanes, whether a road is congested, a vehicle flow speed, a vehicle flow acceleration, and a distance between the terminal device and the obstacle.

The traveling information includes but is not limited to a geographical location, a traveling speed, a traveling direction, a traveling acceleration, a distance between the vehicle and the obstacle, and the like that are of the vehicle. The terminal device includes but is not limited to a vehicle such as a car, a train, a truck, or a communication device installed on the vehicle, for example, a vehicle-mounted device.

The planning and decision-making module 104 includes a behavior prediction module and a planning module. The behavior prediction module is mainly configured to predict, based on the foregoing information collected by the environment perception module, a behavior intent of the obstacle (for example, a driving intent of a target vehicle described below in this application) and a historical moving track. The planning module is configured to obtain a corresponding control policy on a premise that safety is ensured, to subsequently control safe driving of the vehicle by using the control policy. The control policy is self-defined by a user side or a terminal device side in advance, or is generated based on the behavior intent. Details are described below. The control policy is used to indicate to adjust a corresponding vehicle parameter for the vehicle, to implement safe driving of the vehicle.

The control processing module is configured to correspondingly control and adjust the vehicle based on the control policy obtained by the planning and decision-making module, to avoid collision between the vehicle and the obstacle. For example, vehicle parameters such as a steering wheel angle of the vehicle, a traveling speed, whether to brake, and whether to press an acceleration pedal are controlled.

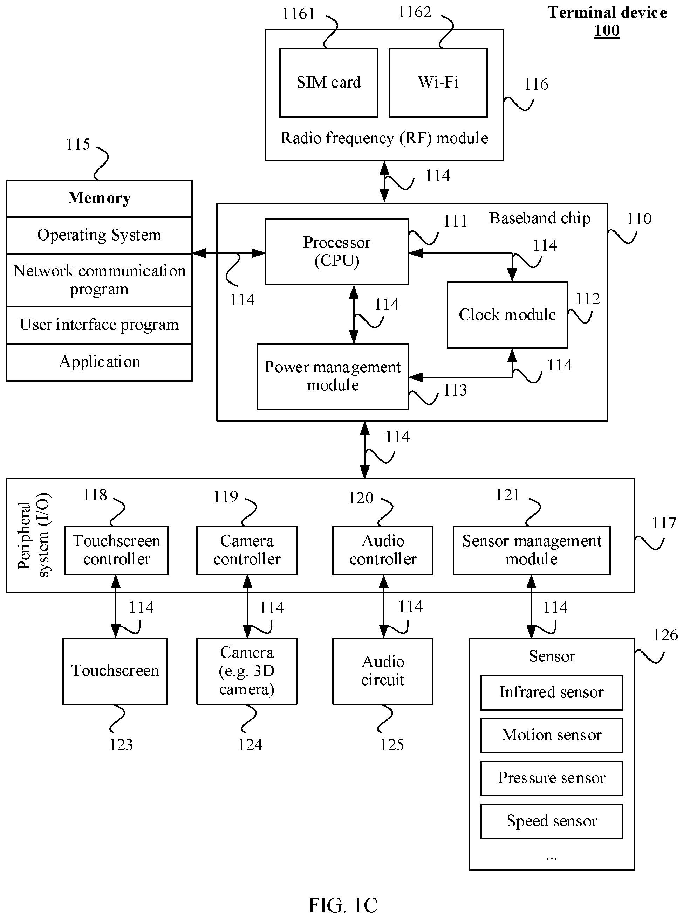

FIG. 1C shows a possible schematic diagram of a structure of another terminal device according to this application. As shown in FIG. 1C, a terminal device 100 may include a baseband chip 110, a memory 115, one or more computer-readable storage media, a radio frequency (RF) module 116, and a peripheral system 117. These components may perform communication by using one or more communication buses 114.

The peripheral system 117 is mainly configured to implement an interaction function between a terminal device 110 and a user/an external environment, and mainly includes an input/output apparatus of the terminal 100. In a specific implementation, the peripheral system 117 may include a touchscreen controller 118, a camera controller 119, an audio controller 120, and a sensor management module 121. The controllers may be coupled to corresponding peripheral devices, for example, a touchscreen 123, a camera 124, an audio circuit 125, and a sensor 126. In some embodiments, a gesture sensor in the sensor 126 may be configured to receive a gesture control operation input by a user. A speed sensor in the sensor 126 may be configured to collect a traveling speed of the terminal device, a moving speed of an obstacle in an environment, or the like. The touchscreen 123 may be used as a prompt apparatus, and is mainly configured to prompt an obstacle through screen display, projection, or the like. For example, when a pedestrian crosses a road, the touchscreen 123 prompts the pedestrian to accelerate walking by displaying a text on the screen. Optionally, the peripheral system 117 may further include another prompt apparatus such as a light or a display, to provide an interactive prompt between the vehicle and a pedestrian, and avoid collision between the vehicle and the pedestrian. It should be noted that the peripheral system 117 may further include another I/O peripheral.

The baseband chip 110 may integrate and include one or more processors 111, a clock module 112, and a power management module 113. The clock module 112 integrated into the baseband chip 110 is mainly configured to generate, for the processor 111, a clock required for data transmission and time sequence control. The power management module 113 integrated into the baseband chip 110 is mainly configured to provide a stable and highprecision voltage for the processor 111, the radio frequency module 116, and the peripheral system.

The radio frequency (RF) module 116 is configured to receive and send a radio frequency signal, and mainly integrates a receiver and a transmitter that are of the terminal 100. The radio frequency (RF) module 116 communicates with a communication network and another communication device by using the radio frequency signal. In a specific implementation, the radio frequency (RF) module 116 may include but is not limited to an antenna system, an RF transceiver, one or more amplifiers, a tuner, one or more oscillators, a digital signal processor, a CODEC chip, a SIM card, a storage medium, and the like. In some embodiments, the radio frequency (RF) module 116 may be implemented on a separate chip.

The memory 115 is coupled to the processor 111, and is configured to store various software programs and/or a plurality of sets of instructions. In a specific implementation, the memory 115 may include a high-speed random access memory, and may further include a non-volatile memory, for example, one or more magnetic disk storage devices, a flash memory device, or another non-volatile solid-state storage device. The memory 115 may store an operating system, for example, an embedded operating system such as ANDROID, IOS, WINDOWS, or LINUX. The memory 115 may further store a network communication program. The network communication program may be used to communicate with one or more additional devices, one or more terminal devices, one or more terminal devices, or the like.

This application may be applied to a driving scenario, and a host vehicle and a target vehicle are included in the driving scenario. The host vehicle is any moving vehicle. The target vehicle is a vehicle surrounding the host vehicle. The host vehicle is used to predict a moving track of the target vehicle. The host vehicle may be an autonomous vehicle, or may be a driver-driven vehicle. In addition, the host vehicle may be a new energy vehicle, or may be a fuel vehicle. The new energy vehicle may be a pure electric vehicle or a hybrid powered vehicle. In this embodiment of the present invention, the host vehicle is not specifically limited. Similarly, the target vehicle may be an autonomous vehicle, or may be a driver-driven vehicle. The target vehicle may be a new energy vehicle, or may be a fuel vehicle. In this disclosed embodiment, similarly, the target vehicle is not specifically limited.

In this embodiment of this application, the target vehicle may be located in a surrounding area of the host vehicle. The surrounding area of the host vehicle refers to an area that is formed within a preset radius range and that takes the host vehicle as a center. The preset radius may be set and modified based on a requirement. The preset radius is not specifically limited in this disclosed embodiment. In addition, the preset radius may be set based on different road attributes. For example, a preset radius corresponding to a highway may be 100 meters or 200 meters, and a preset radius corresponding to a common road may be 20 meters or 30 meters. In an embodiment, the target vehicle may be a vehicle in front of the host vehicle, that is, a vehicle located in a driving direction of the host vehicle.

In the foregoing scenario, the host vehicle needs to predict a driving track of a surrounding vehicle, and control the host vehicle based on the predicted track, to ensure that the autonomous vehicle can safely arrive at a destination. To make a proper decision-making plan, the autonomous driving vehicle needs to have a capability of predicting a driving intent and a future track that are of a surrounding vehicle, to improve efficiency and security of an entire system.

In the prior art, a track of a target vehicle may be predicted based on a historical track. Specifically, historical track information of the target vehicle may be used as input, to directly output a predicted track of the target vehicle. A track prediction algorithm based on the historical track may be, for example, Gaussian process regression (Gaussian process regression, GPR). According to the Gaussian process regression, low-dimensional state space is first mapped to high-dimensional space by using a kernel function, and then the historical track and the predicted track are modeled as multi-dimensional Gaussian distribution by using a mean function and a covariance function. If a segment of historical track is specified, the predicted future track is output. However, in the Gaussian process regression method, a statistical model is obtained based on a large amount of historical track information, and a current movement status of the target vehicle is not considered. In addition, in the method, an interaction between the target vehicle and a surrounding vehicle is not considered, and this does not conform to an actual traffic situation. In this way, prediction accuracy is low.

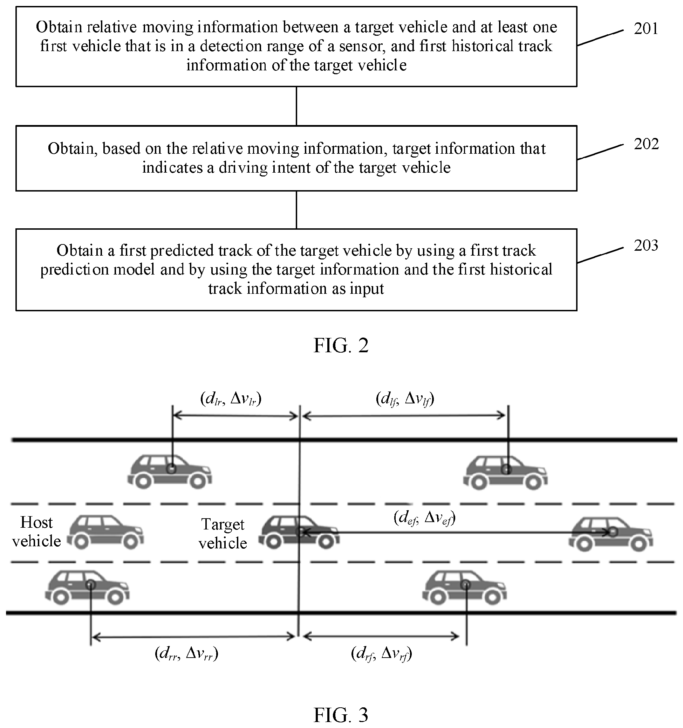

To resolve the foregoing technical problem, refer to FIG. 2. FIG. 2 is a schematic diagram of an embodiment of a track prediction method according to an embodiment of this application. The track prediction method provided in this embodiment includes the following steps.

S201: Obtain relative moving information between a target vehicle and at least one first vehicle that is located in a detection range of a sensor, and first historical track information of the target vehicle.

In this embodiment of this application, the relative moving information may indicate relative distance information and/or relative speed information between the target vehicle and each first vehicle at a plurality of moments, and the first historical track information includes first historical track locations of the target vehicle at a plurality of moments.

In this embodiment of this application, a host vehicle may detect, based on a sensor carried by the vehicle, the at least one first vehicle and the relative moving information between the target vehicle and the at least one first vehicle that is located in the detection range of the sensor.

In this embodiment of this application, the first vehicle may be a vehicle near the target vehicle. In an embodiment, a quantity of first vehicles may be determined based on a vehicle condition surrounding the target vehicle. For example, as shown in FIG. 3, five vehicles, namely, a left front vehicle, a left rear vehicle, a right front vehicle, a right rear vehicle, and a straight front vehicle, of the target vehicle may be used as the first vehicles. Relative moving information of the five first vehicles relative to the target vehicle is separately extracted, where the relative moving information may indicate relative distance information and/or relative speed information between the target vehicle and each first vehicle at a plurality of moments. For example, the relative distance information may be a longitudinal distance d along a driving direction of a lane and a speed Δv between the target vehicle and the first vehicle.

Particularly, in an embodiment, when the target vehicle is located in the leftmost lane, that is, the left lane does not exist for the target vehicle, relative moving information corresponding to a first vehicle on the left side in FIG. 3 may be set to the following information:

$$d_{lf} = 0, \quad d_{lr} = 0, \quad \Delta v_{lf} = 0$$

.

Particularly, in an embodiment, when the left lane exists for the target vehicle but there is no first vehicle on the left front side, relative moving information corresponding to a first vehicle on the left front side in FIG. 3 may be set to the following information:

$$d_{lf} = +1000, \quad \Delta v_{lf} = 0$$

.

Particularly, in an embodiment, when the left lane exists for the target vehicle but there is no first vehicle on the left rear side, relative moving information corresponding to a first vehicle on the left rear side in FIG. 3 may be set to the following information:

$$d_{lf} = -1000, \quad \Delta v_{lf} = 0$$

.

Particularly, in an embodiment, when the left lane exists for the target vehicle, but there is no first vehicle on the left front side or on the left rear side, relative moving information corresponding to a first vehicle on the left front side and a first vehicle on the left rear side in FIG. 3 may be set to the following information:

$$d_{lf} = +1000, \quad d_{lr} = -1000, \quad \Delta v_{lf} = 0$$.

Particularly, in an embodiment, when there is no first vehicle on the straight front side of the target vehicle, relative moving information corresponding to a first vehicle on the straight front side in FIG. 3 may be set to the following information:

$$d_{sf} = +1000, \Delta v_{sf} = 0. \quad d_{ef} = +1000, \quad \Delta v_{ef} = 0$$

.

Setting of the relative moving information in the foregoing embodiment is merely an example, and does not constitute a limitation on this application. For setting of the relative moving information of the first vehicle on the right side of the target vehicle, refer to the foregoing embodiment. This is not limited herein.

In an embodiment, the host vehicle may obtain the relative moving information between the target vehicle and the at least one first vehicle by using a sensor that is carried by the host vehicle and that is configured to collect moving information. For example, the sensor that collects the moving information may be a camera, a radar, or the like. The radar may be a millimeter-wave radar, a laser radar, or the like. This is not limited herein.

In this embodiment of this application, the first historical track information of the target vehicle may be further obtained. The first historical track information may include first historical track locations of the target vehicle at a plurality of moments, and the first historical track information indicates track information perpendicular to a direction of a lane in which the target vehicle is located. For example, the first historical track information may include first historical track locations of the target vehicle at a moment A, a moment B, and a moment C.

In this embodiment of this application, second historical track information of the target vehicle may be further obtained. The second historical track information is track information in a direction consistent with the direction of the lane in which the target vehicle is located. The historical track information of the target vehicle may be obtained by using the first historical track information and the second historical track information.

In a possible implementation, the host vehicle may send a track obtaining request to the target vehicle, where the track obtaining request is used to request to obtain the first historical track information and the second historical track information that are of the target vehicle. The target vehicle receives the track obtaining request sent by the host vehicle, and sends the first historical track information and the second historical track information that are of the target vehicle to the host vehicle based on the track obtaining request. Before the host vehicle sends the track obtaining request to the target vehicle, the host vehicle establishes an information transmission channel with the target vehicle. Correspondingly, the host vehicle and the target vehicle perform information transmission by using the information transmission channel. The information transmission channel may be an Internet of Vehicles (vehicles of internet, V2I) transmission channel, a near field communication (for example, Bluetooth) transmission channel, or the like.

In another possible implementation, the host vehicle may obtain the first historical track information and the second historical track information that are of the target vehicle from a monitoring device. Correspondingly, the host vehicle may obtain the historical track information of the target vehicle by using the following steps: The host vehicle sends the track obtaining request to the monitoring device, where the track obtaining request carries a vehicle identifier of the target vehicle. The monitoring device receives the track obtaining request sent by the host vehicle, obtains the historical track information of the target vehicle based on the vehicle identifier of the target vehicle, and sends the historical track information of the target vehicle to the host vehicle. The host vehicle receives the first historical track information and the second historical track information that are of the target vehicle and that are sent by the monitoring device. The monitoring device is a sensor configured to collect moving information, for example, a camera or a radar. To improve precision, the radar may be a millimeter-wave radar, a laser radar, or the like. The vehicle identifier may be a license plate number or the like of the target vehicle.

The foregoing manner of obtaining the first historical track information and the second historical track information that are of the target object and the relative moving information between the target vehicle and the at least one first vehicle is merely an example, and is not limited in this application.

S202: Obtain, based on the relative moving information, target information that indicates a driving intent of the target vehicle.

In this embodiment of this application, the driving intent may include at least one of the following: changing a lane to the left, changing a lane to the right, or keeping straight driving.

In an embodiment, a payoff value of each driving intent of the target vehicle at each moment may be obtained by using a linear payoff function model and by using the relative moving information as input; and the target information that indicates the driving intent of the target vehicle is obtained by using a recurrent neural network and by using the payoff value of each driving intent of the target vehicle at each moment as input.

In addition, in this application, a linear function is used as a payoff function to determine payoff values, that is, GL, GR, and GK, of the driving intents. A matrix form of these payoff values may be as follows:

$$
\begin{bmatrix} GL \\ GR \\ GK \end{bmatrix} = \begin{bmatrix} \alpha_1^L & \alpha_2^L & \alpha_3^L & \alpha_4^L & \alpha_5^L & \alpha_6^L & \alpha_7^L & \alpha_8^L & \alpha_9^L & \alpha_{10}^L \\ \alpha_1^R & \alpha_2^R & \alpha_3^R & \alpha_4^R & \alpha_5^R & \alpha_6^R & \alpha_7^R & \alpha_8^R & \alpha_9^R & \alpha_{10}^R \\ \alpha_1^K & \alpha_2^K & \alpha_3^K & \alpha_4^K & \alpha_5^K & \alpha_6^K & \alpha_7^K & \alpha_8^K & \alpha_9^K & \alpha_{10}^K \end{bmatrix} \begin{bmatrix} d_{lf} \\ \Delta v_{lf} \\ d_{lr} \\ \Delta v_{lr} \\ d_{rf} \\ \Delta v_{rf} \\ d_{rr} \\ \Delta v_{rr} \\ d_{ef} \\ \Delta v_{ef} \end{bmatrix} + \begin{bmatrix} \alpha_0^L \\ \alpha_0^R \\ \alpha_0^K \end{bmatrix},
$$

where

GL indicates a payoff value obtained when the target vehicle changes the lane to the left, GR indicates a payoff value obtained when the target vehicle changes the lane to the right, and GK indicates a payoff value obtained when the target vehicle keeps straight driving;

$d_{lf}$ represents a distance between the target vehicle and the first vehicle on the left front side;
$\Delta v_{lf}$ represents a relative speed between the target vehicle and the first vehicle on the left front side;
$d_{lr}$ represents a distance between the target vehicle and the first vehicle on the left rear side;
$\Delta v_{lr}$ represents a relative speed between the target vehicle and the first vehicle on the left rear side;
$d_{rf}$ represents a distance between the target vehicle and the first vehicle on the right front side;
$\Delta v_{rf}$ represents a relative speed between the target vehicle and the first vehicle on the right front side;
$d_{rr}$ represents a distance between the target vehicle and the first vehicle on the right rear side;
$\Delta v_{rr}$ represents a relative speed between the target vehicle and the first vehicle on the right rear side;
$d_{ef}$ represents a distance between the target vehicle and the first vehicle driving on the straight front side; and
$\Delta v_{ef}$ represents a relative speed between the target vehicle and the first vehicle driving on the straight front side.

In this embodiment, the linear payoff function in the foregoing formula has a total of 1 1x3=33 parameters:

$$\begin{bmatrix} \alpha_1^L & \alpha_2^L & \alpha_3^L & \alpha_4^L & \alpha_5^L & \alpha_6^L & \alpha_7^L & \alpha_8^L & \alpha_9^L & \alpha_{10}^L \\ \alpha_1^R & \alpha_2^R & \alpha_3^R & \alpha_4^R & \alpha_5^R & \alpha_6^R & \alpha_7^R & \alpha_8^R & \alpha_9^R & \alpha_{10}^R \\ \alpha_1^K & \alpha_2^K & \alpha_3^K & \alpha_4^K & \alpha_5^K & \alpha_6^K & \alpha_7^K & \alpha_8^K & \alpha_9^K & \alpha_{10}^K \end{bmatrix} \text{ and } \begin{bmatrix} \alpha_0^L & \alpha_0^R & \alpha_0^K \end{bmatrix}.$$

In this embodiment of this application, each parameter included in the matrix may be learned by using an actual driving intent of the target vehicle. For example, a parameter $\begin{bmatrix} \alpha_i^L & \alpha_i^R & \alpha_i^K \end{bmatrix}$, $i = 0, 1, 2, 3, ..., 10$ may be initialized first, and then an iterative operation is performed:

1. Calculate the payoff values GL, GR, and GK;
2. Calculate, by using a softmax function, probabilities of changing the lane to the right, changing the lane to the right, and keeping straight driving;
3. Calculate a classified cross entropy loss by using the actual driving intent of the target vehicle;
4. Update a parameter $\begin{bmatrix} \alpha_i^L & \alpha_i^R & \alpha_i^K \end{bmatrix}$, $i = 0, 1, 2, 3, ..., 10$ by using a gradient descent algorithm; and
5. The iteration stops when a convergence condition is met.

In this embodiment of this application, after the linear payoff function model is trained, if relative moving information between the target vehicle and a first vehicle surrounding the target vehicle is given, the payoff values (the payoff value GL of changing the lane to the left, the payoff value GR of changing the lane to the right, and the payoff value GK of keeping straight driving) of all driving intents of the target vehicle may be calculated. The payoff values are obtained based on the relative moving information between the target vehicle and the at least one first vehicle surrounding the target vehicle. Therefore, an interaction relationship between the target vehicle and the at least one first vehicle can be represented to a large extent.

In this embodiment of this application, after the obtaining a payoff value of each driving intent of the target vehicle at each moment by using a linear payoff function model and by using the relative moving information as input, the target information that indicates the driving intent of the target vehicle may be obtained by using a recurrent neural network and by using the payoff value of each driving intent of the target vehicle at each moment as input.

In this embodiment of this application, the recurrent neural network may be a long short-term memory (long short-term memory, LSTM) network or a gated recurrent unit GRU. An example in which a recurrent neural network model is the long short-term memory LSTM network is used below for description.

The LSTM is described as follows.

The LSTM algorithm is a recurrent neural network (recurrent neural network, RNN) in a specific form, and the RNN is a general term of a series of neural networks that can process sequence data. The RNN further has many variants, for example, a bidirectional RNN (bidirectional RNN). However, the RNN has great difficulty in dealing with long-term dependencies (nodes that are far away from each other in a time sequence): When connections between the nodes that are far away from each other are being calculated, a plurality of multiplications of Jacobian matrix may be performed, and consequently a problem of gradient disappearance (which frequently occurs) or gradient expansion (which rarely occurs) is caused. To resolve this problem, a gated RNN (Gated RNN) is most widely used, and the LSTM is one of the most famous among the gated RNNs. A leaky element allows, by designing a weight coefficient between connections, the RNN to accumulate long-term connections between nodes that are far away from each other. The gated RNN generalizes this idea, allows the coefficient to be changed at different moments, and allows a network to forget information that has been accumulated. The LSTM is such a gated RNN. The LSTM adds an input gate, a forget gate, and an output gate, so that a self-loop weight changes. In this way, when a model parameter is unchanged, an integral scale may dynamically change at different moments, so that the problem of gradient disappearance or gradient expansion is avoided.

It should be noted that, in addition to obtaining the payoff value of each driving intent of the target vehicle at each moment, distances (dl, dr) ($d_l$, $d_r$ between the target vehicle and the left lane line and between the target vehicle and the right lane line, and a lateral velocity vd $v_d$ may be further obtained. In addition, the target information that indicates the driving intent of the target vehicle is output by using an LSTM model and by using the payoff value of the driving intent of the target vehicle at each moment, the distances (dl, dr) between the target vehicle and the left lane line and the right lane line, and the lateral velocity vd as input. The target information may be probabilities (a probability of changing the lane to the left, a probability of changing the lane to the right, and a probability of keeping straight driving)($P_L$, $P_R$, $P_K$) that represent all driving intents.

In this embodiment of this application, a payoff function is used to model an interaction between the target vehicle and a first vehicle surrounding the target vehicle, and then the payoff value is used as input of a driving intent recognition model, so that the driving intent of the target vehicle can be more accurately recognized, complexity of the model is reduced, and the model is more explainable.

S203: Obtain a first predicted track of the target vehicle by using a first track prediction model and by using the target information and the first historical track information as input.

In this embodiment of this application, a movement status and the second historical track information that are of the target vehicle may be further obtained. The second historical track information is track information consistent with a driving direction of the target vehicle. The movement status of the target vehicle may indicate a current movement status of the target vehicle, for example, a driving speed or a driving acceleration.

In this embodiment of this application, a second predicted track of the target vehicle may be further obtained by using a second track prediction model and by using the movement status and the second historical track information that are of the target vehicle as input, where the second predicted track is a component of the driving track of the target vehicle in a direction parallel to the lane.

In this embodiment of this application, the predicted track of the target vehicle may be determined based on the obtained first predicted track and the obtained second predicted track.

In this embodiment of this application, because there is a huge (two to three orders of magnitude) difference between a lateral loss and a longitudinal loss of the target vehicle, a problem that the lateral loss cannot be reduced occurs in an optimization process. In addition, because the driving intent and the movement status have different impacts on a lateral direction and a longitudinal direction, a lateral track prediction model and a longitudinal track prediction model may be separately established in this embodiment of this application. The lateral direction may be understood as being perpendicular to a direction of a lane in which the target vehicle is located, and the longitudinal direction may be understood as being consistent with the direction of the lane in which the target vehicle is located. The direction of the lane may be understood as a direction of a lane line.

In this embodiment of this application, a horizontal track prediction model and a vertical track prediction model that are of a target vehicle are separately constructed, and driving intents of the target vehicle are separately considered in horizontal and vertical directions, so that a more accurate predicted track of the target vehicle can be obtained.

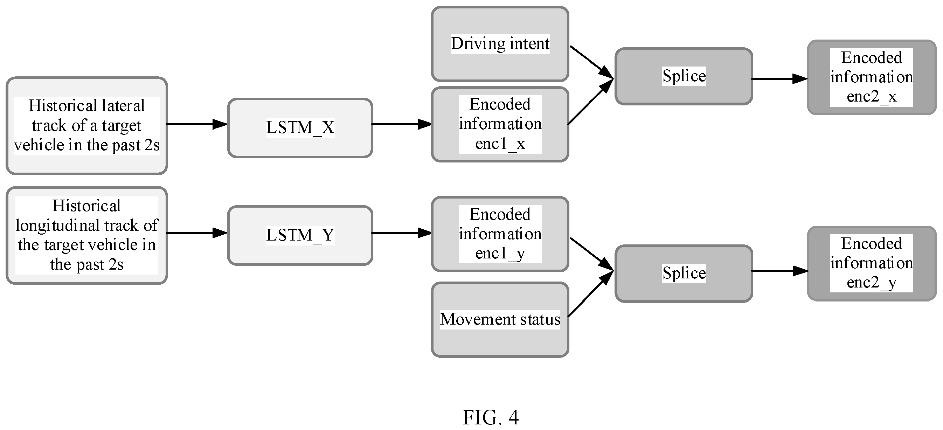

Both the lateral target vehicle track prediction model and the longitudinal target vehicle track prediction model are encoder-decoders. FIG. 4 is a schematic diagram of an encoding process of a track prediction model according to an embodiment of this application. In the encoding process shown in FIG. 4, a lateral encoder considers a historical lateral track (first track information) and driving intents (probabilities of changing the lane to the right, changing the lane to the right, and keeping straight driving) that are of the target vehicle, and a longitudinal encoder considers a historical longitudinal track (second track information) and current movement statuses (for example, a speed and an acceleration) that are of the target vehicle, to obtain lateral and longitudinal encoded information.

The first predicted track includes a plurality of predicted track locations. A plurality of pieces of encoded information are obtained by using an LSTM encoder and by using the target information and the first historical track information as input, where each moment corresponds to one piece of encoded information; and the plurality of predicted track locations are obtained by using an LSTM decoder and by using the plurality of pieces of encoded information as input, where the LSTM decoder is configured to perform decoding based on a plurality of pieces of input data to obtain the plurality of predicted track locations, and each piece of input data is related to the plurality of pieces of encoded information. Optionally, each piece of input data is obtained by weighting the plurality of pieces of encoded information.

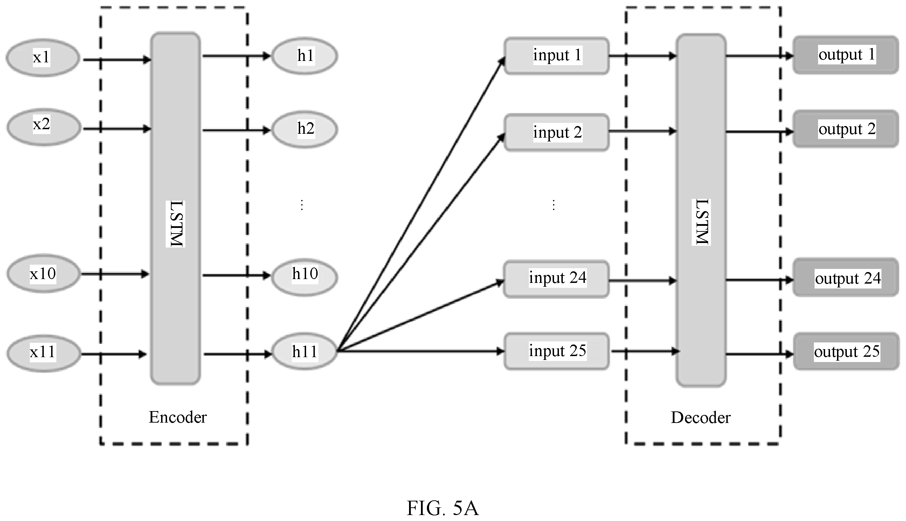

A function of a decoder is to parse encoded information of an encoder, to obtain a predicted track of the target vehicle in a future time period (for example, 5s). However, a common decoder uses only output of a hidden layer at a last moment of an encoder as input of the decoder. As shown in FIG. 5A, h1 to h11 are output of the encoder at various moments. FIG. 5A is a schematic flowchart of a decoding process. A common track decoder uses only h11 as input of the decoder, and historical information is not fully utilized.

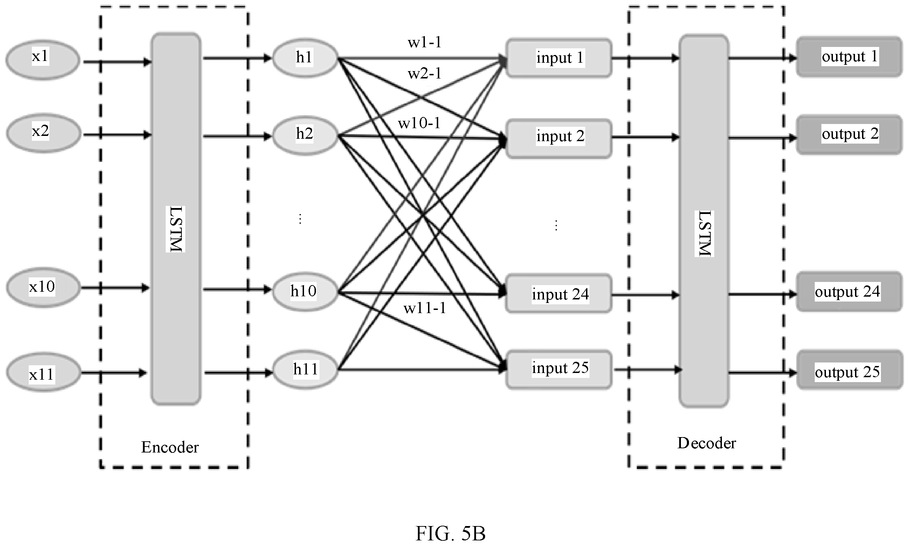

In this embodiment of this application, FIG. 5B is a schematic flowchart of a decoding process according to this application. As shown in FIG. 5B, input of a decoder at each moment depends on output of an encoder at all moments. Input 1 of the decoder at the first moment is used as an example. Weights $w_1^1, w_2^1, \cdots\cdots, w_2^{10}, w_2^{11}$ of $h1$ - $h11$ output h1 to h11 of the encoder at all moments are obtained by using an attention mechanism. In this case:

$$input1 = \sum_{i=1}^{11} hi \times w_2^i.$$

In this embodiment of this application, output information of the decoder is effectively and fully used, so that a prediction result is more accurate.

The following describes, with reference to an application instance, the track prediction method provided in embodiments of this application.

Step 1: Collect and process data.

An NGSIM (next-generation-simulation) open-source database is used to extract historical tracks of a target vehicle and a first vehicle surrounding the target vehicle in the past 2s. A sampling time is 0.2s, and there are a total of 11 sampling points. Historical track information of the target vehicle is processed, longitudinal distances and longitudinal speeds of five surrounding first vehicles relative to the target vehicle are extracted, and standardized. For example, a total of 13023 samples are extracted as a training set, and a total of 6511 samples are extracted as a test set. The following table shows one sample.

**Table 1: An information table about data extraction and processing**

| time | $d_{lf}$ | $\Delta v_{lf}$ | $d_{lr}$ | $\Delta v_{lr}$ | $d_{rf}$ | $\Delta v_{rf}$ | $d_{rr}$ | $\Delta v_{rrr}$ | $d_{ef}$ | $\Delta v_{ef}$ |
|---|---|---|---|---|---|---|---|---|---|---|
| 1 | 0.536 | -0.840 | 0.528 | 0.944 | 0.460 | 0.020 | 0.737 | -0.428 | 0.551 | -0.003 |
| 2 | 0.536 | -0.815 | 0.572 | 0.918 | 0.618 | 0.047 | 0.772 | -0.462 | 0.339 | -0.021 |
| 3 | 0.530 | -0.791 | 0.573 | 0.892 | 0.615 | 0.075 | 0.544 | -0.490 | 0.338 | -0.038 |
| ... | ... | ... | ... | ... | ... | ... | ... | ... | ... | ... |
| 9 | 0.137 | -0.664 | 0.472 | 0.743 | 0.551 | 0.001 | 0.318 | -0.566 | 0.603 | -0.170 |
| 10 | 0.321 | -0.651 | 0.584 | 0.718 | 0.077 | -0.011 | 0.621 | -0.590 | 0.332 | -0.190 |
| 11 | 0.520 | -0.629 | 0.908 | 0.682 | 0.358 | 0.000 | 1.065 | -0.632 | 0.014 | -0.197 |

Step 2: Calculate payoff values obtained when the target vehicle changes a lane to the left, changes a lane to the right, and keeps straight driving.

The payoff values (GL, GR, and GK) are calculated and normalized. Table 2 lists payoff values of one sample.

**Table 2 A table about payoff values of the target vehicle**

| time | GL | GR | GK | time | GL | GR | GK |
|---|---|---|---|---|---|---|---|
| 1 | 0.376 | 0.023 | 0.601 | 7 | 0.442 | 0.027 | 0.531 |
| 2 | 0.328 | 0.024 | 0.648 | 8 | 0.469 | 0.029 | 0.502 |
| 3 | 0.319 | 0.026 | 0.655 | 9 | 0.583 | 0.027 | 0.390 |
| 4 | 0.324 | 0.023 | 0.654 | 10 | 0.555 | 0.016 | 0.429 |
| 5 | 0.341 | 0.023 | 0.636 | 11 | 0.594 | 0.015 | 0.392 |
| 6 | 0.438 | 0.026 | 0.537 | | | | |

Step 3: Recognize a driving intent of the target vehicle.

The foregoing payoff values, a relative distance between the target vehicle and a left lane line, a relative distance between the target vehicle and a right lane line, and a lateral speed are used as input of an LSTM network. For example, network hyperparameters may be set as follows: a batch size batch_size is 128, a quantity of iterations Epoch is 150, and a learning rate is 0.001. A cross entropy loss is used, and an Adam optimizer is used to update parameters. After a network training is complete, the network is saved offline. During a test, the network is directly invoked to identify driving intents in the 6511 test samples.

Step 4: Predict a lateral track and a longitudinal track (a first predicted track and a second predicted track) that are of the target vehicle.

A historical lateral track of the target vehicle in the past 2s is used as input of a lateral encoder, to obtain initial encoded information, and then the driving intent probabilities obtained in the foregoing step are spliced with the initial encoded information, to obtain final lateral encoded information. The encoded information is input into an attention mechanism-based decoder, to obtain a lateral predicted track of the target vehicle in the future 5s.

Similarly, a historical longitudinal track of the target vehicle in the past 2s is used as input of a longitudinal encoder, to obtain initial encoded information, and then current movement statuses are spliced with the initial encoded information, to obtain final longitudinal encoded information. The encoded information is input into an attention mechanism-based decoder, to obtain a longitudinal predicted track of the target vehicle in the future 5s.

For example, a network structure of an encoder-decoder may be as follows: An input length input_length is 11, an output length output_length is 25, a size of a hidden layer of the encoder encoder_size is 64, and a size of a hidden layer of the decoder decoder_size is 64. A fully-connected layer is separately added after an input layer and an LSTM encoding layer. A size of each hidden layer is 32, a batch size batch_size is 128, a quantity of iterations Epoch is 150, and a learning rate is 0.001. A mean squared error loss is used, and an optimizer is used to update parameters.

In this embodiment of this application, the relative moving information between the target vehicle and the at least one first vehicle is obtained, and the first historical track information of the target vehicle is obtained; the target information that indicates the driving intent of the target vehicle is obtained based on the relative moving information; and the first predicted track of the target vehicle is obtained by using the first track prediction model and by using the target information and the first historical track information as input. In the foregoing manner, the driving intent of the target vehicle is used as input of track prediction, so that the track prediction for the target vehicle is more accurate.

The foregoing mainly describes the solutions provided in embodiments of the present invention from a perspective of the terminal device. It may be understood that, to implement the foregoing functions, the terminal device includes corresponding hardware structures and/or software modules for performing the functions. With reference to units and algorithm steps in the examples described in embodiments disclosed in the present invention, embodiments of the present invention can be implemented in a form of hardware or a combination of hardware and computer software. Whether a function is performed by hardware or hardware driven by computer software depends on a particular application and a design constraint condition that are of the technical solutions. A person skilled in the art may use different methods to implement the described functions for each particular application, but it should not be considered that the implementation goes beyond the scope of the technical solutions in embodiments of the present invention.

In embodiments of the present invention, the terminal device may be divided into functional units based on the foregoing method examples. For example, each functional unit may be obtained through division for each corresponding function, or two or more functions may be integrated into one processing unit. The integrated unit may be implemented in a form of hardware, or may be implemented in a form of a software functional unit. It should be noted that, in embodiments of the present invention, unit division is an example, and is merely logical function division. In an actual implementation, another division manner may be used.

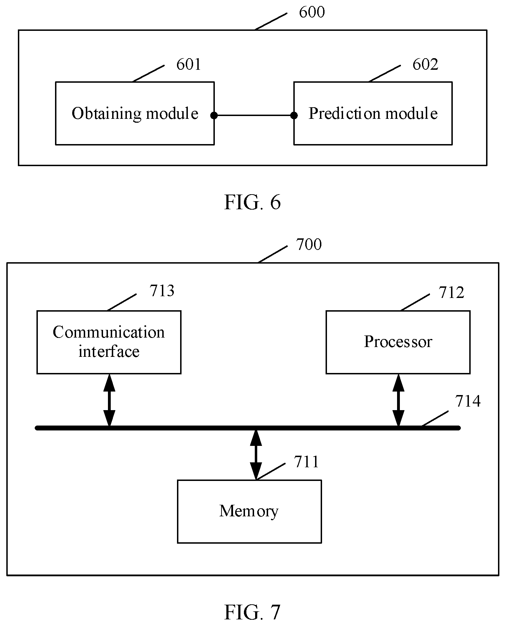

When an integrated unit is used, FIG. 6 is a possible schematic diagram of a structure of a terminal device described in the foregoing embodiment of this application. A terminal device 600 includes: an obtaining module 601, configured to: obtain relative moving information between a target vehicle and at least one first vehicle that is located in a detection range of a sensor, and first historical track information of the target vehicle, and obtain, based on the relative moving information, target information that indicates a driving intent of the target vehicle; and a prediction module 602, configured to obtain a first predicted track of the target vehicle by using a first track prediction model and by using the target information and the first historical track information as input.

Optionally, the driving intent includes at least one of the following: changing a lane to the left, changing a lane to the right, or keeping straight driving.

Optionally, the relative moving information indicates relative distance information and/or relative speed information between the target vehicle and each first vehicle at a plurality of moments, and the first historical track information includes first historical track locations of the target vehicle at a plurality of moments.

Optionally, the obtaining module 601 is specifically configured to: obtain a payoff value of each driving intent of the target vehicle at each moment by using a linear payoff function model and by using the relative moving information as input, and obtain the target information that indicates the driving intent of the target vehicle by using a recurrent neural network and by using the payoff value of each driving intent of the target vehicle at each moment as input.

Optionally, the first historical track information and the first predicted track are components of a driving track of the target vehicle in a direction perpendicular to a lane, and the lane is a lane in which the target vehicle is located.

Optionally, the first predicted track includes a plurality of predicted track locations. The prediction module 602 is specifically configured to: obtain a plurality of pieces of encoded information by using an LSTM encoder and by using the target information and the first historical track information as input, where each moment corresponds to one piece of encoded information, and obtain the plurality of predicted track locations by using an LSTM decoder and by using the plurality of pieces of encoded information as input, where the LSTM decoder is configured to perform decoding based on a plurality of pieces of input data to obtain the plurality of predicted track locations, and each piece of input data is related to the plurality of pieces of encoded information.

Optionally, each piece of input data is obtained by weighting the plurality of pieces of encoded information.

Optionally, the obtaining module 601 is further configured to obtain a movement status and second historical track information that are of the target vehicle, where the second historical track information is a component of a driving track of the target vehicle in a direction parallel to a lane, and the lane is a lane in which the target vehicle is located. The prediction module 602 is further configured to obtain a second predicted track of the target vehicle by using a second track prediction model and by using the movement status and the second historical track information that are of the target vehicle as input, where the second predicted track is a component of the driving track of the target vehicle in a direction parallel to the lane.

Optionally, the terminal device 600 may further include a storage unit, configured to store program code and data that are of the terminal device 600.

In this embodiment of this application, the prediction module 601 may be integrated into a processing module, where the processing module may be a processor or a controller. For example, the processing module may be a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA), or another programmable logic device, a transistor logic device, a hardware component, or any combination thereof. The processing module may implement or execute various examples of logical blocks, modules, and circuits described with reference to content disclosed in the present invention. The processor may alternatively be a combination of processors implementing a computing function, for example, a combination of one or more microprocessors or a combination of a DSP and a microprocessor.

FIG. 7 is a schematic diagram of a structure of another terminal device 700 according to an embodiment of this application.

As shown in FIG. 7, the terminal device 700 includes a processor 712, a communication interface 713, and a memory 77. Optionally, the terminal device 700 may further include a bus 714. The communication interface 713, the processor 712, and the memory 77 may be connected to each other by using the bus 714. The bus 714 may be a peripheral component interconnect (peripheral component interconnect, PCI) bus, an extended industry standard architecture (extended industry standard architecture, EISA) bus, or the like. The bus 714 may be classified into an address bus, a data bus, a control bus, and the like. For ease of representation, only one thick line is used to represent the bus in FIG. 7, but this does not mean that there is only one bus or only one type of bus.

The processor 712 may perform the following steps:

obtaining relative moving information between a target vehicle and at least one first vehicle, and first historical track information of the target vehicle;
obtaining, based on the relative moving information, target information that indicates a driving intent of the target vehicle; and
obtaining a first predicted track of the target vehicle by using a first track prediction model and by using the target information and the first historical track information as input.

Optionally, the driving intent includes at least one of the following:
changing a lane to the left, changing a lane to the right, or keeping straight driving.

Optionally, the relative moving information indicates relative distance information and/or relative speed information between the target vehicle and each first vehicle at a plurality of moments, and the first historical track information includes first historical track locations of the target vehicle at a plurality of moments.

Optionally, the processor 712 may perform the following steps:

obtaining a payoff value of each driving intent of the target vehicle at each moment by using a linear payoff function model and by using the relative moving information as input; and
obtaining, by using a recurrent neural network and by using the payoff value of each driving intent of the target vehicle at each moment as input, the target information that indicates the driving intent of the target vehicle.

Optionally, the first historical track information and the first predicted track indicate track information in a direction perpendicular to a direction of a lane in which the target vehicle is located.

Optionally, the first predicted track includes a plurality of predicted track locations, and the processor 712 may perform the following steps:

obtaining a plurality of pieces of encoded information by using an LSTM encoder and by using the target information and the first historical track information as input, where each moment corresponds to one piece of encoded information; and
obtaining the plurality of predicted track locations by using an LSTM decoder and by using the plurality of pieces of encoded information as input, where the LSTM decoder is configured to perform decoding based on a plurality of pieces of input data to obtain the plurality of predicted track locations, and each piece of input data is related to the plurality of pieces of encoded information.

Optionally, each piece of input data is obtained by weighting the plurality of pieces of encoded information.
Optionally, the processor 712 may further perform the following steps:

obtaining a movement status and second historical track information that are of the target vehicle, where the second historical track information is track information in a direction consistent with a driving direction of the target vehicle; and
obtain a second predicted track of the target vehicle by using a second track prediction model and by using the movement status and the second historical track information that are of the target vehicle as input, where the second predicted track is a component of the driving track of the target vehicle in a direction parallel to the lane.

For specific implementation of the terminal device shown in FIG. 7, correspondingly refer to the corresponding descriptions in the foregoing embodiment. Details are not described herein again.

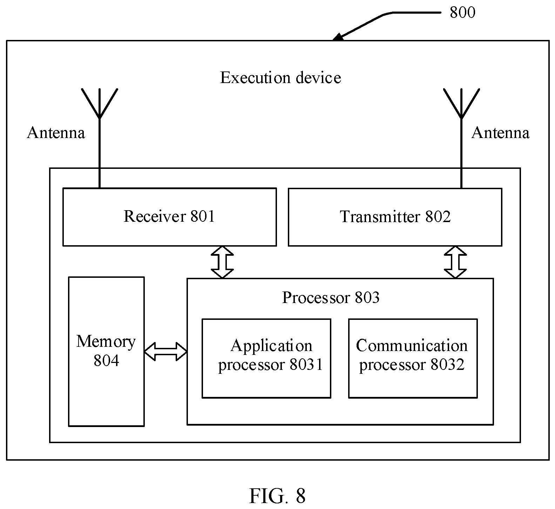

The following describes an execution device according to an embodiment of this application. FIG. 8 is a schematic diagram of a structure of an execution device according to an embodiment of this application. The terminal device described in the embodiment corresponding to FIG. 6 or FIG. 7 may be deployed on an execution device 800, to implement functions of the terminal device in the embodiments corresponding to FIG. 6 and FIG. 7. Specifically, the execution device 800 includes a receiver 801, a transmitter 802, a processor 803, and a memory 804 (there may be one or more processors 803 in the execution device 800, and one processor is used as an example in FIG. 8). The processor 803 may include an application processor 8031 and a communication processor 8032. In some embodiments of this application, the receiver 801, the transmitter 802, the processor 803, and the memory 804 may be connected by using a bus or in another manner.

The memory 804 may include a read-only memory and a random access memory, and provide instructions and data to the processor 803. A part of the memory 804 may further include a non-volatile random access memory (non-volatile random access memory, NVRAM). The memory 804 stores a processor and operation instructions, an executable module or a data structure, or a subset thereof, or an extended set thereof. The operation instructions may include various operation instructions used to implement various operations.

The processor 803 controls an operation of the execution device. During specific application, the components of the execution device are coupled together through a bus system. In addition to a data bus, the bus system may further include a power bus, a control bus, a status signal bus, and the like. However, for clear description, various types of buses in the figure are referred to as the bus system.

The methods disclosed in the foregoing embodiments of this application may be applied to the processor 803, or may be implemented by the processor 803. The processor 803 may be an integrated circuit chip and has a signal processing capability. In an implementation process, the steps in the foregoing methods may be completed by using a hardware integrated logic circuit in the processor 803, or by using instructions in a form of software. The processor 803 may be a general-purpose processor, a digital signal processor (digital signal processor, DSP), a microprocessor, or a microcontroller. The processor 803 may further include an application-specific integrated circuit (application specific integrated circuit, ASIC), a field programmable gate array (field-programmable gate array, FPGA) or another programmable logic device, a discrete gate, or a transistor logic device, or a discrete hardware component. The processor 803 may implement or perform the methods, the steps, and the logical block diagrams disclosed in embodiments of this application. The general-purpose processor may be a microprocessor, or the processor may be any conventional processor, or the like. Steps of the methods disclosed with reference to embodiments of this application may be directly performed and completed by using a hardware decoding processor, or may be performed and completed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory 804, and the processor 803 reads information in the memory 804 and completes the steps of the foregoing methods in combination with hardware of the processor 803.

The receiver 801 may be configured to receive input digit or character information, and generate signal input related to a related setting and function control of the execution device. The transmitter 802 may be configured to output digit or character information through a first interface. The transmitter 802 may be further configured to send instructions to a disk group through the first interface, to modify data in the disk group.

An embodiment of this application further provides a computer program product. When the computer program product is run on a computer, the computer is enabled to perform the steps performed by the terminal device in the method described in the embodiment shown in FIG. 6 or FIG. 7.

An embodiment of this application further provides a computer-readable storage medium. The computer-readable storage medium stores a program used for signal processing. When the program is run on a computer, the computer is enabled to perform the steps performed by the terminal device in the method described in the embodiment shown in FIG. 6 or FIG. 7.

The execution device or the terminal device that is provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that the chip in the execution device is enabled to perform the track prediction method described in the embodiment shown in FIG. 2. Optionally, the storage unit is a storage unit in the chip, for example, a register or a cache; or the storage unit may be a storage unit that is in the radio access device end and that is located outside the chip, for example, a read-only memory (read-only memory, ROM), another type of static storage device that can store static information and instructions, or a random access memory (random access memory, RAM).

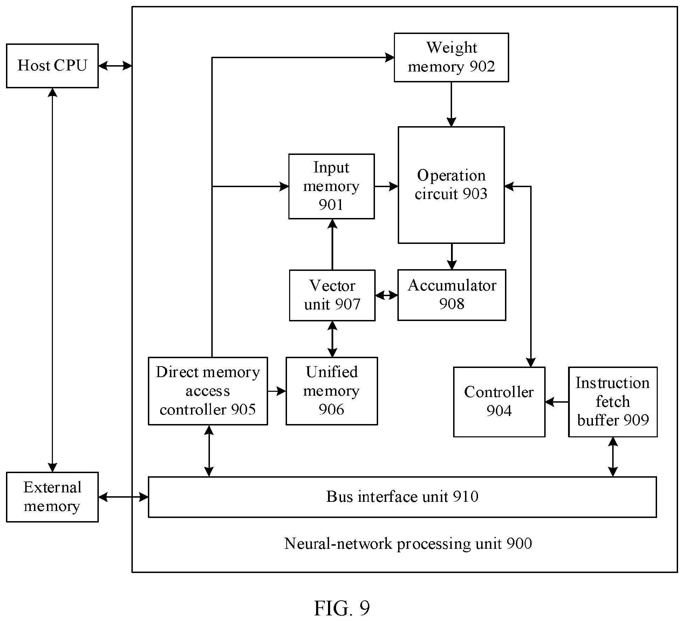

Specifically, refer to FIG. 9. FIG. 9 is a schematic diagram of a structure of a chip according to an embodiment of this application. The chip may be represented as a neural-network processing unit NPU 900. The NPU 900 is mounted to a host CPU (Host CPU) as a coprocessor, and the host CPU allocates a task. A core part of the NPU is an operation circuit. A controller 904 controls an operation circuit 903 to extract matrix data in a memory and perform a multiplication operation.

In some implementations, the operation circuit 903 internally includes a plurality of processing units (Process Engine, PE). In some implementations, the operation circuit 903 is a two-dimensional systolic array. The operation circuit 903 may alternatively be a one-dimensional systolic array or another electronic circuit that can perform mathematical operations such as multiplication and addition. In some implementations, the operation circuit 903 is a general-purpose matrix processor.

For example, it is assumed that there are an input matrix A, a weight matrix B, and an output matrix C. The operation circuit fetches data corresponding to the matrix B from the weight memory 902, and buffers the data in each PE in the operation circuit. The operation circuit fetches data of the matrix A from an input memory 901, to perform a matrix operation on the matrix B, and stores an obtained partial result or an obtained final result of the matrix into an accumulator (accumulator) 908.

A unified memory 906 is configured to store input data and output data. Weight data is directly transferred to the weight memory 902 by using a direct memory access controller (Direct Memory Access Controller, DMAC) 905. The input data is also transferred to the unified memory 906 by using the DMAC.

BIU is a Bus Interface Unit, that is, a bus interface unit 910. The bus interface unit 910 is configured to perform interaction between an AXI bus and the DMAC and between the AXI bus and an instruction fetch buffer (Instruction Fetch Buffer, IFB) 909.

The bus interface unit 910 (Bus Interface Unit, BIU for short) is used by the instruction fetch buffer 909 to obtain instructions from an external memory, and is further used by the direct memory access controller 905 to obtain original data of the input matrix A or the weight matrix B from the external memory.

The DMAC is mainly configured to transfer input data in an external memory DDR to the unified memory 906, or transfer the weight data to the weight memory 902, or transfer the input data to the input memory 901.

A vector unit 907 includes a plurality of operation processing units. If necessary, the vector unit 907 performs further processing, such as vector multiplication, vector addition, an exponential operation, a logarithm calculation, and size comparison, on output of the operation circuit. The vector unit 907 is mainly configured to perform network computing, such as Batch Normalization (batch normalization), pixel-level summation, and upsampling for a feature map, on a non-convolutional/fully-connected layer in a neural network.

In some implementations, the vector unit 907 can store a processed output vector in the unified memory 906. For example, the vector unit 907 may apply a linear function and/or a non-linear function to output of the operation circuit 903, for example, performing linear interpolation on a feature map extracted by a convolutional layer, and for another example, a vector of an accumulated value, to generate an activation value. In some implementations, the vector unit 907 generates a normalized value, a pixel-level summation value, or both. In some implementations, the processed output vector can be used as an activation input of the operation circuit 903, for example, can be used in a subsequent layer in the neural network.

The instruction fetch buffer (instruction fetch buffer) 909 connected to the controller 904 is configured to store instructions used by the controller 904.

The unified memory 906, the input memory 901, the weight memory 902, and the instruction fetch buffer 909 are all On-Chip memories. The external memory is private to the NPU hardware architecture.

The processor mentioned anywhere above may be a general-purpose central processing unit, a microprocessor, an ASIC, or one or more integrated circuits that are configured to control program execution of the method according to the first aspect.

In addition, it should be noted that the described apparatus embodiments are merely examples. The units described as separate parts may or may not be physically separate, and parts displayed as units may or may not be physical units. In other words, the parts may be located in one location, or may be distributed on a plurality of network units. Some or all the modules may be selected based on an actual requirement to achieve the objectives of the solutions of the embodiments. In addition, in the accompanying drawings of the apparatus embodiments provided in this application, connection relationships between modules indicate that the modules have communication connections with each other. The communication connections may be specifically implemented as one or more communication buses or signal cables.

Based on the description in the foregoing implementations, a person skilled in the art may clearly understand that this application may be implemented by using software in combination with necessary universal hardware, or certainly, may be implemented by using dedicated hardware, including an application-specific integrated circuit, a dedicated CPU, a dedicated memory, a dedicated component, or the like. Usually, all functions completed by a computer program may be easily implemented by using corresponding hardware, and a specific hardware structure used to implement a same function may also be in various forms, for example, a form of an analog circuit, a digital circuit, or a dedicated circuit. However, for this application, software program implementation is a better implementation in most cases. Based on such an understanding, the technical solutions of this application essentially or the part that contributes to the prior art may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods described in embodiments of this application.

All or some of the foregoing embodiments may be implemented by using software, hardware, firmware, or any combination thereof. When software is used to implement embodiments, embodiments may be implemented completely or partially in a form of a computer program product.

The computer program product includes one or more computer instructions. When the computer program instructions are loaded and executed on a computer, all or some of the procedures or the functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

**Claims**

1. A track prediction method, wherein the method comprises:

   obtaining relative moving information between a target vehicle and at least one first vehicle that is located in a detection range of a sensor, and first historical track information of the target vehicle; wherein the first vehicle is a vehicle near the target vehicle;
   obtaining, based on the relative moving information, target information that indicates a driving intent of the target vehicle; and
   obtaining a first predicted track of the target vehicle by using a first track prediction model and by using the target information and the first historical track information as input.

2. The method according to claim 1, wherein the driving intent comprises at least one of the following:
   changing a lane to the left, changing a lane to the right, or keeping straight driving.

3. The method according to claim 1 or 2, wherein the relative moving information indicates relative distance information and/or relative speed information between the target vehicle and each first vehicle at a plurality of moments, and the first historical track information comprises first historical track locations of the target vehicle at a plurality of moments.

4. The method according to claim 3, wherein the obtaining, based on the relative moving information, target information that indicates a driving intent of the target vehicle comprises:

   obtaining a payoff value of each driving intent of the target vehicle at each moment by using a linear payoff function model and by using the relative moving information as input; and
   obtaining, by using a recurrent neural network and by using the payoff value of each driving intent of the target vehicle at each moment as input, the target information that indicates the driving intent of the target vehicle.

5. The method according to any one of claims 1 to 4, wherein the first historical track information and the first predicted track are components of a driving track of the target vehicle in a direction perpendicular to a lane, and the lane is a lane in which the target vehicle is located.

6. The method according to any one of claims 3 to 5, wherein the first predicted track comprises a plurality of predicted track locations, and the obtaining a first predicted track of the target vehicle by using a first track prediction model and by using the target information and the first historical track information as input comprises:

   obtaining a plurality of pieces of encoded information by using an LSTM encoder and by using the target information and the first historical track information as input, wherein each moment corresponds to one piece of encoded information; and

obtaining the plurality of predicted track locations by using an LSTM decoder and by using the plurality of pieces of encoded information as input, wherein the LSTM decoder is configured to perform decoding based on a plurality of pieces of input data to obtain the plurality of predicted track locations, and each piece of input data is related to the plurality of pieces of encoded information.

7. The method according to claim 6, wherein each piece of input data is obtained by weighting the plurality of pieces of encoded information.

8. The method according to any one of claims 1 to 7, wherein the method further comprises:

obtaining a movement status and second historical track information that are of the target vehicle, wherein the second historical track information is a component of a driving track of the target vehicle in a direction parallel to a lane, and the lane is a lane in which the target vehicle is located; and
obtaining a second predicted track of the target vehicle by using a second track prediction model and by using the movement status and the second historical track information that are of the target vehicle as input, wherein the second predicted track is a component of the driving track of the target vehicle in a direction parallel to the lane.

9. An execution device, comprising:

an obtaining module, configured to: obtain relative moving information between a target vehicle and at least one first vehicle that is located in a detection range of a sensor, and first historical track information of the target vehicle, and
obtain, based on the relative moving information, target information that indicates a driving intent of the target vehicle; and
a prediction module, configured to obtain a first predicted track of the target vehicle by using a first track prediction model and by using the target information and the first historical track information as input.

10. The execution device according to claim 9, wherein the driving intent comprises at least one of the following: changing a lane to the left, changing a lane to the right, or keeping straight driving.

11. The execution device according to claim 9 or 10, wherein the relative moving information indicates relative distance information and/or relative speed information between the target vehicle and each first vehicle at a plurality of moments, and the first historical track information comprises first historical track locations of the target vehicle at a plurality of moments.

12. The execution device according to claim 11, wherein the obtaining module is specifically configured to:

obtain a payoff value of each driving intent of the target vehicle at each moment by using a linear payoff function model and by using the relative moving information as input; and
obtain, by using a recurrent neural network and by using the payoff value of each driving intent of the target vehicle at each moment as input, the target information that indicates the driving intent of the target vehicle.

13. The execution device according to any one of claims 9 to 12, wherein the first historical track information and the first predicted track are components of a driving track of the target vehicle in a direction perpendicular to a lane, and the lane is a lane in which the target vehicle is located.

14. The execution device according to any one of claims 11 to 13, wherein the first predicted track comprises a plurality of predicted track locations, and the prediction module is specifically configured to:

obtain a plurality of pieces of encoded information by using an LSTM encoder and by using the target information and the first historical track information as input, wherein each moment corresponds to one piece of encoded information; and
obtain the plurality of predicted track locations by using an LSTM decoder and by using the plurality of pieces of encoded information as input, wherein the LSTM decoder is configured to perform decoding based on a plurality of pieces of input data to obtain the plurality of predicted track locations, and each piece of input data is related to the plurality of pieces of encoded information.

15. The execution device according to claim 14, wherein each piece of input data is obtained by weighting the plurality of pieces of encoded information.

16. The execution device according to any one of claims 9 to 15, wherein the obtaining module is further configured to:

> obtain a movement status and second historical track information that are of the target vehicle, wherein the second historical track information is a component of a driving track of the target vehicle in a direction parallel to a lane, and the lane is a lane in which the target vehicle is located; and
> the prediction module is further configured to:
> obtain a second predicted track of the target vehicle by using a second track prediction model and by using the movement status and the second historical track information that are of the target vehicle as input, wherein the second predicted track is a component of the driving track of the target vehicle in a direction parallel to the lane.

17. A terminal device, comprising a memory, a communication interface, and a processor coupled to the memory and the communication interface, wherein the memory is configured to store instructions, the processor is configured to execute the instructions, the communication interface is configured to communicate with a target vehicle under control of the processor, and when the processor executes the instructions, the processor performs the method according to any one of claims 1 to 8.

18. A computer-readable storage medium, wherein the computer-readable storage medium stores a computer program, and when the computer program is executed by a processor, the method according to any one of claims 1 to 8 is implemented.

Intelligent information chain

Intelligent product and industry application

| Translation/Text analysis/... | Voice/Vision/Image/... |

| Data | Data processing: | Data training/ Machine learning/ Deep learning | Search/Inference/ Decision-making | ... |

| Infrastructure | Sensor | Intelligent chip | Basic platform | ... |

IT value chain

FIG. 1A

Terminal device

| Environment perception module 102 | Planning and decision-making module 104 | Control processing module 106 |

FIG. 1B

Terminal device
**100**

1161    1162

SIM card    Wi-Fi    116

Radio frequency (RF) module    114

115

| **Memory** |
| Operating System |
| Network communication program |
| User interface program |
| Application |

Processor (CPU)    111    Baseband chip    110

114    114

114    Clock module    112

Power management module    113    114

114

Peripheral system (I/O)    117

118    119    120    121

Touchscreen controller    Camera controller    Audio controller    Sensor management module

114    114    114    114

126

Touchscreen    Camera (e.g. 3D camera)    Audio circuit    Sensor

123    124    125    Infrared sensor

Motion sensor

Pressure sensor

Speed sensor

...

FIG. 1C

Obtain relative moving information between a target vehicle and at least one first vehicle that is in a detection range of a sensor, and first historical track information of the target vehicle ⟋ 201

Obtain, based on the relative moving information, target information that indicates a driving intent of the target vehicle ⟋ 202

Obtain a first predicted track of the target vehicle by using a first track prediction model and by using the target information and the first historical track information as input ⟋ 203

FIG. 2

$(d_{lr}, \Delta v_{lr})$ $(d_{lf}, \Delta v_{lf})$

Host vehicle

Target vehicle $(d_{ef}, \Delta v_{ef})$

$(d_{rr}, \Delta v_{rr})$ $(d_{rf}, \Delta v_{rf})$

FIG. 3

```
┌─────────────────────┐      ┌─────────────┐      ┌──────────────┐
│ Historical lateral  │      │             │      │   Driving    │
│  track of a target  │ ──►  │   LSTM_X    │      │    intent    │──┐
│ vehicle in the past │      │             │      └──────────────┘  │     ┌─────────┐      ┌──────────────┐
│         2s          │      └─────────────┘──┐   ┌──────────────┐  ├──► │ Splice  │ ──► │   Encoded    │
└─────────────────────┘                       │   │   Encoded    │  │   └─────────┘      │  information  │
                                              └──►│  information │──┘                     │    enc2_x    │
                                                  │    enc1_x    │                        └──────────────┘
                                                  └──────────────┘

┌─────────────────────┐      ┌─────────────┐      ┌──────────────┐
│     Historical      │      │             │      │   Encoded    │
│ longitudinal track  │ ──►  │   LSTM_Y    │ ──►  │  information │──┐
│ of the target       │      │             │      │    enc1_y    │  │     ┌─────────┐      ┌──────────────┐
│  vehicle in the     │      └─────────────┘      └──────────────┘  ├──► │ Splice  │ ──► │   Encoded    │
│      past 2s        │                           ┌──────────────┐  │   └─────────┘      │  information  │
└─────────────────────┘                           │  Movement    │──┘                     │    enc2_y    │
                                                  │    status    │                        └──────────────┘
                                                  └──────────────┘
```

FIG. 4

FIG. 5A

FIG. 5B

600

601

Obtaining module

602

Prediction module

FIG. 6

700

713

Communication interface

712

Processor

714

711

Memory

FIG. 7

800

Execution device

Antenna

Antenna

Receiver 801

Transmitter 802

Processor 803

Memory 804

Application processor 8031

Communication processor 8032

FIG. 8

FIG. 9

Europäisches
Patentamt
European
Patent Office
Office européen
des brevets

# EUROPEAN SEARCH REPORT

**Application Number**

EP 26 16 1233

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/158873 A1 (HONDA MOTOR CO LTD [JP]) 7 September 2018 (2018-09-07) * paragraph [0025] * * paragraph [0040] - paragraph [0041] * * paragraph [0063] - paragraph [0066] * * paragraph [0071] * * paragraph [0091] - paragraph [0093] * * paragraph [0116] * * figures 1, 4, 11 * ----- | 1-18 | INV. G06N3/044 G06N3/0442 G06N3/045 G06N3/0455 G06N3/08 G06N3/09 G08G1/01 G08G1/16 B60W60/00 G06N3/02 |
| A | US 2019/329783 A1 (SHALEV-SHWARTZ SHAI [IL] ET AL) 31 October 2019 (2019-10-31) * paragraph [0255] - paragraph [0256] * * paragraph [0448] * ----- | 1-18 | |
| A | DE 10 2017 219377 A1 (BAYERISCHE MOTOREN WERKE AG [DE]) 2 May 2019 (2019-05-02) * paragraph [0043] - paragraph [0046] * ----- | 1-18 | |

**TECHNICAL FIELDS SEARCHED (IPC)**

G08G

The present search report has been drawn up for all claims

| Place of search | Date of completion of the search | Examiner |
|---|---|---|
| The Hague | 22 June 2026 | Stark, Konrad |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
........................................................................................
& : member of the same patent family, corresponding
   document

EPO FORM 1503 03.82 (P4C01)

## ANNEX TO THE EUROPEAN SEARCH REPORT
## ON EUROPEAN PATENT APPLICATION NO.

EP 26 16 1233

This annex lists the patent family members relating to the patent documents cited in the above-mentioned European search report.
The members are as contained in the European Patent Office EDP file on
The European Patent Office is in no way liable for these particulars which are merely given for the purpose of information.

22-06-2026

| Patent document cited in search report | Publication date | Patent family member(s) | | Publication date |
|---|---|---|---|---|
| WO 2018158873 A1 | 07-09-2018 | CN | 110267856 A | 20-09-2019 |
| | | JP | 6811303 B2 | 13-01-2021 |
| | | JP | WO2018158873 A1 | 07-11-2019 |
| | | US | 2020001867 A1 | 02-01-2020 |
| | | WO | 2018158873 A1 | 07-09-2018 |
| US 2019329783 A1 | 31-10-2019 | CA | 3049770 A1 | 19-07-2018 |
| | | CN | 110325823 A | 11-10-2019 |
| | | CN | 110383008 A | 25-10-2019 |
| | | CN | 110657820 A | 07-01-2020 |
| | | EP | 3545265 A2 | 02-10-2019 |
| | | EP | 3548845 A2 | 09-10-2019 |
| | | EP | 3657130 A1 | 27-05-2020 |
| | | EP | 4230964 A1 | 23-08-2023 |
| | | EP | 4549279 A2 | 07-05-2025 |
| | | IL | 267857 A | 26-09-2019 |
| | | IL | 287819 A | 01-01-2022 |
| | | IL | 293713 A | 01-08-2022 |
| | | JP | 7159533 B2 | 25-10-2022 |
| | | JP | 7160251 B2 | 25-10-2022 |
| | | JP | 7283680 B2 | 30-05-2023 |
| | | JP | 7601337 B2 | 17-12-2024 |
| | | JP | 2020015504 A | 30-01-2020 |
| | | JP | 2020506838 A | 05-03-2020 |
| | | JP | 2020516971 A | 11-06-2020 |
| | | JP | 2022173452 A | 18-11-2022 |
| | | KR | 20190099088 A | 23-08-2019 |
| | | KR | 20190107057 A | 18-09-2019 |
| | | KR | 20190107071 A | 18-09-2019 |
| | | US | 2019329768 A1 | 31-10-2019 |
| | | US | 2019329769 A1 | 31-10-2019 |
| | | US | 2019329773 A1 | 31-10-2019 |
| | | US | 2019329782 A1 | 31-10-2019 |
| | | US | 2019329783 A1 | 31-10-2019 |
| | | US | 2019333381 A1 | 31-10-2019 |
| | | US | 2021269021 A1 | 02-09-2021 |
| | | US | 2022363248 A1 | 17-11-2022 |
| | | US | 2023347877 A1 | 02-11-2023 |
| | | WO | 2018132607 A2 | 19-07-2018 |
| | | WO | 2018132608 A2 | 19-07-2018 |
| | | WO | 2018132614 A2 | 19-07-2018 |
| DE 102017219377 A1 | 02-05-2019 | NONE | | |

EPO FORM P0459

For more details about this annex : see Official Journal of the European Patent Office, No. 12/82